# EUROPEAN PATENT APPLICATION

(11) **EP 3 035 765 A1**
(43) Date of publication of application: **22.06.2016**
(21) Application number: 14307068.8
(22) Date of filing: 18.12.2014
(51) Int. Cl.: H04W 74/08, H04W 74/00, H04W 56/00

(54) **A method for a random access procedure, and a base station and a device therefor**

(71) Applicant: ALCATEL LUCENT, 92100 Boulogne-Billancourt (FR)
(72) Inventor: Doetsch, Uwe, 70435 Stuttgart (DE); Braun, Volker, 70435 Stuttgart (DE)
(74) Representative: Kleinbub, Oliver

(57) **Abstract**

The invention concerns a method for a random access procedure for access of a device to a network, wherein the device uses a format for the random access procedure out of at least two for-mats (FOR1, FOR2) for the random access procedure, and said format for the random access procedure is chosen based on a certainty of uplink transmission timing of the device, and a base station and a device therefor.

## Description

### Field of the invention

The invention relates to a method for a random access procedure for access of a device to a network, and a base station and a device adapted to perform said method.

### Background

Massive Machine Communication (MMC) is expected to create a large amount of traffic volume in future wireless networks, in particular involving small payload packets.

MMC techniques can be integrated into a wireless broadband system. The MMC devices are typically low-cost and their functionality may be reduced as compared to a conventional user equipment, as e.g. smart phones, tablets, etc.. Also the power consumption of MMC devices shall be minimized by adequate design of the air interface.

Such a wireless broadband system in which MMC techniques can be integrated is e.g. a multicarrier system, as Orthogonal Frequency Division Multiplexing (OFDM), Universal Filtered Multicarrier (UFMC), Single Carrier Frequency Division Multiple Access (SC-FDMA), Filter Bank Multicarrier (FBMC), etc. with resource allocation in Transmission Time Intervals (TTI) and frequency resources, as e.g. subcarriers or resource blocks similar to Long Term Evolution (LTE).

### Summary

An issue with small packets in current wireless broadband systems such as Long Term Evolution (LTE) is that the signaling overhead is large compared to the payload, thus making the transmission of small payload packets very inefficient.

Thus, the technical problem is to design efficient solutions for uplink transmission of small data packets, transmitted sporadically by a large number of devices, primarily in the context of Massive Machine Communication (MMC) using a wireless broadband system. Also the power consumption of MMC devices shall be minimized by adequate design of the air interface.

A solution according to the state of the art e.g. in LTE uses a random access procedure to make a device known to the network by exchanging a short device identifier (ID), as e.g. a 16bit Cell Radio Network Temporary Identifier (C-RNTI), and to synchronize the uplink (UL) timing e.g. within the accuracy of a cyclic prefix. After completion of the procedure, the device receives a scheduling grant and sends its payload.

A device in idle mode, e.g. after wake up, performs cell search, performs random access procedure, sends UL data, waits for application layer acknowledgement (ACK) and then falls back to sleep or idle mode. The procedure is repeated for each access of the device to the network.

A disadvantage of the random access solution of LTE is that the random access window, i.e. the random access preamble, is consuming a vast amount of radio resources:
- 6 physical resource blocks (PRBs), i.e. 72 subcarriers are needed in frequency domain for a random access preamble, corresponding approximately to a bandwidth of 1 MHz.
- A 1ms random access window in time domain is needed comprising a random access preamble of 0.9 ms length including a cyclic prefix of 0.1 ms duration, and a 0.1 ms gap or guard time.

The gap of 0.1 ms is sufficient to cope with a cell radius of about 15 km. A random access window can carry 64 preambles in theory, but in practice this number reduces to about 5 due to user-specific time and frequency offsets, propagation effects due to movement and shadowing of the user, as well as noise and inter-cell interference.

If frequent random access attempts are required in a cell this requires many radio resources for random access windows and thus reduces the cell throughput significantly.

A basic idea is to introduce a dual or multi mode random access solution using two or more different formats for the random access window, i.e. random access preamble. The following Random Access Channel (RACH) formats can be used according to an embodiment for a dual mode random access solution:
- A first RACH format is used for initial access of a device to a network, e.g. after wake up or during handover of the device, used by the device to attach to a cell w/o any prior knowledge. Such a first RACH format can e.g. be the RACH format of LTE, which is a robust format able to cope with large propagation delays.
- A second RACH format is used by the device to attach to the same cell under certain conditions. The usage of the second RACH format can e.g. require that the device has approximate knowledge of the required UL time adjust for uplink transmission timing, e.g. within a small integer multiple of the CP duration of an Orthogonal Frequency Division Multiplexing (OFDM) symbol, which is approximately 4.7 µs.

The second RACH format therefore occupies much less radio resources than the first RACH format for the same amount of random access preambles.

With stationary or almost stationary MMC devices, the second RACH format would be used far more frequently than the first RACH format, as stationary or almost stationary MMC devices experience only a small change of the required UL time adjust for uplink transmission timing. Also smartphones may use the second RACH format, in particular pedestrian users that rarely roam over wider areas for bursty applications like chat or signaling traffic.

There are multiple ways a device can detect whether the UL time adjust is sufficiently tight in order to apply the second RACH format:
- From geo-location information such as Global Positioning System (GPS) coordinates, which applies above all for smartphones.
- As the device was previously synchronized with the same cell, the device memorizes its internal time shift position of the correlation peak of the downlink (DL) cell search procedure together with the UL time adjust value previously obtained from the network. After wake up, if the DL cell search results in a similar value of the internal timing position of the correlation peak, the second RACH format can be applied and be transmitted by applying the time advance memorized from the previous wake-up cycle. This assumes that the device is equipped with a sufficiently precise clock running also in sleep mode, in order to ensure that the position of the correlation peaks is related to the propagation delay also during different wake-up cycles, e.g. a stationary device will then obtain the correlation peaks at the same delay timing position in different wake-up cycles in the same cell. The device may fall back to using the first RACH format, if the time duration between two consecutive wake-up cycles may exceed a predefined threshold. In this case the internal timing positions of the correlation peaks between the wake-up cycles may not be sufficiently well aligned.

If a transmission of a random access preamble according to the second RACH format is not causing a reaction by the network within a limited number of attempts, the device falls back to using the first RACH format.

The network may bar a device from using the second RACH format, e.g. if the network detects that the device is roaming across cells.

The object of the invention is thus achieved by a method for a random access procedure for access of a device to a network, wherein the device uses a format for the random access procedure out of at least two formats for the random access procedure, and said format for the random access procedure is chosen based on a certainty of uplink transmission timing of the device.

The object of the invention is furthermore achieved by a base station suitable for random access procedures for access of devices to a network, wherein said base station is operable to receive random access preambles for at least two formats of the random access procedure dependent on a certainty of uplink transmission timings of the devices, and determine uplink transmission timings of the devices by evaluating the random access preambles.

The object of the invention is furthermore achieved by a device suitable for a random access procedure for access of the device to a network, wherein the device is operable to choose a format for the random access procedure out of at least two formats for the random access procedure based on a certainty of uplink transmission timing of the device, and send in uplink a random access preamble for the chosen format of the random access procedure.

A format of a random access procedure as used herein can e.g. refer to a random access window comprising a preamble including a cyclic prefix, and a gap or guard time.

In an embodiment of the invention, a first format for the random access procedure which is chosen for a first certainty of uplink transmission timing of the device occupies more radio resources than a second format for the random access procedure which is chosen for a second certainty of uplink transmission timing, the first certainty of uplink transmission timing being lower than the second certainty of uplink transmission timing.

In an embodiment of the invention, the first format for the random access procedure is chosen for an initial access of the device to the network.

In an embodiment of the invention, the second format for the random access procedure is chosen if the location of the device has been determined or if a time difference of correlation peaks of a downlink cell search procedure before and after wake up of the device in a same cell is below a predefined threshold.

In an embodiment of the invention, the second format for the random access procedure is chosen if a velocity of the device is below a predefined threshold.

In an embodiment of the invention, the second format for the random access procedure is chosen for applications with burst data transmission or signaling traffic.

In an embodiment of the invention, the first format for the random access procedure is chosen if usage of the second format for the random access procedure does not cause a reaction by the network within a predefined number of attempts for the random access procedure.

In an embodiment of the invention, the network bars the device from using the second format for the random access procedure if the network detects that the device is roaming across at least two cells.

In an embodiment of the invention, a correlation between downlink timing from a cell search algorithm and adjustment of uplink transmission timing for devices using the first format for the random access procedure is determined.

In an embodiment of the invention, a relation between downlink timing and uplink transmission timing is unambiguous in the network, where the timing relation may be defined e.g. at base station antenna port.

In an embodiment of the invention, information on a relation between downlink timing and uplink transmission timing is signaled in downlink in the network, where the timing relation may be defined e.g. at base station antenna port.

Further developments of the invention can be gathered from the following description.

### Brief description of the figures

In the following the invention will be explained further making reference to the attached drawings.
Fig. 1 schematically shows a communication network in which the invention can be implemented.
Fig. 2 schematically shows the structure of a device and a base station in which the invention can be implemented.
Fig. 3 schematically shows time-frequency resource allocations of 6 physical resource blocks over 14 symbols for two formats of a random access procedure according to embodiments of the invention.
Fig. 4 schematically shows time-frequency resource allocations of a frame with RACH windows of only one format of a random access procedure, and of a frame with RACH windows of two formats of a random access procedure according to embodiments of the invention.
Fig. 5 schematically shows a message sequence chart for a random access procedure with different formats according to embodiments of the invention.

### Description of the embodiments

The invention is described in the following within the framework of 3GPP LTE. However the invention is not restricted to 3GPP LTE or enhancements thereof, like LTE-Advanced (LTE-A), but can in principle be applied in other networks that applies allocation of uplink resources to devices, like e.g. a High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc. The invention may also be applied in future networks, like e.g. in 5G networks. In the following, instead of the term eNodeB used in LTE, the more general term base station is used.

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms, including technical and scientific terms, used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the sequel we assume an air interface using multi-carrier modulation scheme such as OFDM, or possibly some filtered OFDM solutions such as UF-OFDM or FBMC. However, the proposal can in principle also be applied to other modulation techniques, e.g. single carrier techniques, as e.g. SC-FDMA, with prefix/postfix blocks.

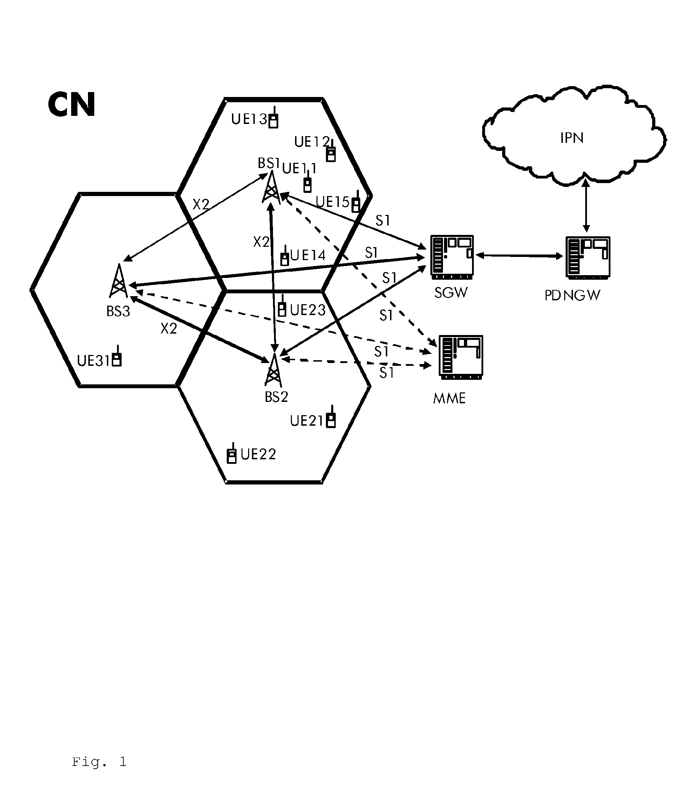

Fig. 1 shows as an example of a communication network in which the invention can be implemented a communication network CN according to the standard 3GPP LTE.

Said communication network CN comprises base stations BS1-BS3, devices UE11-UE31, a serving gateway SGW, a packet data network gateway PDNGW, and a mobility management entity MME.

The devices UE11-UE15 are connected via radio connections to the base station BS1, the devices UE21-UE23 are connected via radio connections to the base station BS2, and the device UE31 is connected via a radio connection to the base station BS3. In future evolutions of LTE, each of the devices UE11-UE31 can also be connected via radio connections to multiple of said base stations BS1-BS3. The devices UE11-UE31 can be high rate, i.e. broadband devices, as e.g. smartphones or tablets, or small payload devices, as e.g. sensors.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signaling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a device and the respective serving base station BS1-BS3.

The mobility management entity MME performs tasks of the subscriber management and the session management, and also performs the mobility management during handover between different access networks.

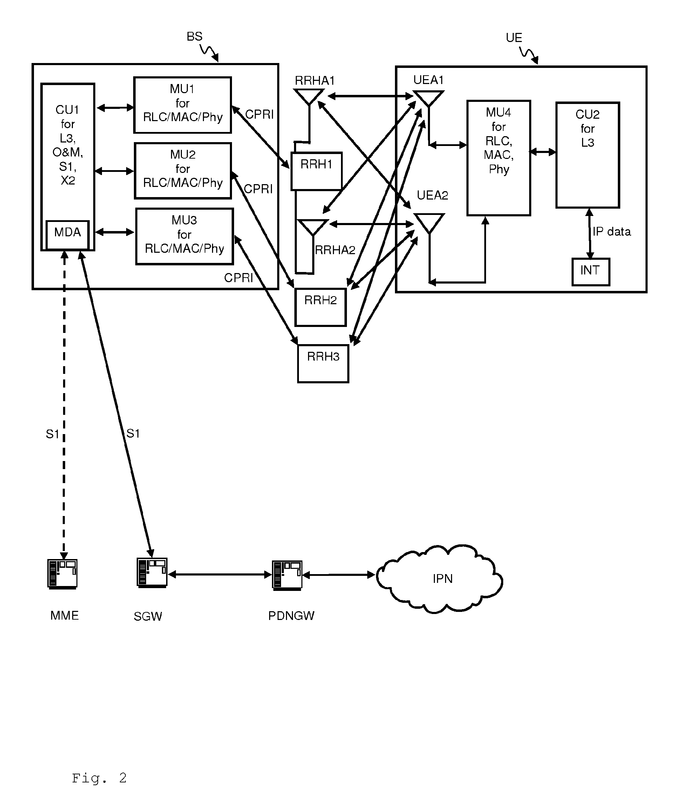

Fig. 2 schematically shows the structure of a device UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity. As an alternative, the remote radio heads RRH1, RRH2, and RRH3 can be included in the base station BS.

The media dependent adapter MDA is connected to the mobility management entity MME and to the serving gateway SGW and thus to the packet data network gateway PDNGW, which is in turn connected to the external IP network IPN.

The device UE comprises by way of example two device antennas UEA1 and UEA2, a modem unit board MU4, a control unit board CU2, and interfaces INT.

The two device antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The device antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analog way in the reverse direction from the device UE to the external IP network IPN.

The base station BS can be operable to communicate with one or more active devices UE and a base station can be located in or adjacent to a coverage area of another base station, e.g. a macro cell base station or small cell base station. Hence, embodiments may provide a mobile communication system comprising one or more devices and one or more base stations, wherein the base stations may establish macro cells or small cells, as e.g. pico-, metro-, or femto cells. A device may correspond to a smartphone, a cell phone, user equipment, a laptop, a notebook, a personal computer, a Personal Digital Assistant (PDA), a Universal Serial Bus (USB) -stick, a car, a sensor for sensor networks, which might transmit and receive data with or without the interaction of a human being and other fixed installed or mobile communication devices able to transmit and receive data, etc. A device may also be referred to as User Equipment or mobile in line with the 3GPP terminology.

A base station can be located in the fixed or stationary part of the network or system. A base station may correspond to a transmission point, an access point, a macro cell, a small cell, a micro cell, a femto cell, a metro cell etc. A base station may comprise the functionality of a remote radio head as depicted in fig. 2 and described above. A base station can be a wireless interface of a wired network, which enables transmission of radio signals to a device. Such a radio signal may comply with radio signals as, for example, standardized by 3GPP or, generally, in line with one or more of the above listed systems. Thus, a base station may correspond to a NodeB, an eNodeB, a Base Transceiver Station (BTS), an access point, a remote radio head, a transmission point etc., which may be further subdivided in a remote unit and a central unit.

A device can be associated, camped on, or registered with a base station or cell. The term cell refers to a coverage area of radio services provided by a base station, e.g. a NodeB (NB), an eNodeB (eNB), a remote radio head, a transmission point, etc. A base station may operate one or more cells on one or more frequency layers, in some embodiments a cell may correspond to a sector. For example, sectors can be achieved using sector antennas, which provide a characteristic for covering an angular section around a remote unit or base station. In some embodiments, a base station may, for example, operate three or six cells covering sectors of 120° (in case of three cells), 60° (in case of six cells) respectively. A base station may operate multiple sectorized antennas. In the following a cell may represent an according base station generating the cell or, likewise, a base station may represent a cell the base station generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station for which their coverage areas are determined by their transmission power and interference condition. In some embodiments a small cell's coverage area can at least partly be surrounded by the coverage area of a macro cell established by another base station. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below 100 m. A femto cell may be the smallest cell and it may be used to cover a household or gate section at the airport, i.e. its coverage area may have a diameter below 50m. Thus, a base station may also be referred to as cell.

As already mentioned above, a basic idea is to introduce a dual or multi mode random access solution using two or more different formats for the random access window, i.e. random access preamble, in order to design efficient solutions for uplink transmission of small data packets, transmitted sporadically by a large number of devices, primarily in the context of Massive Machine Communication (MMC) using a wireless broadband system.

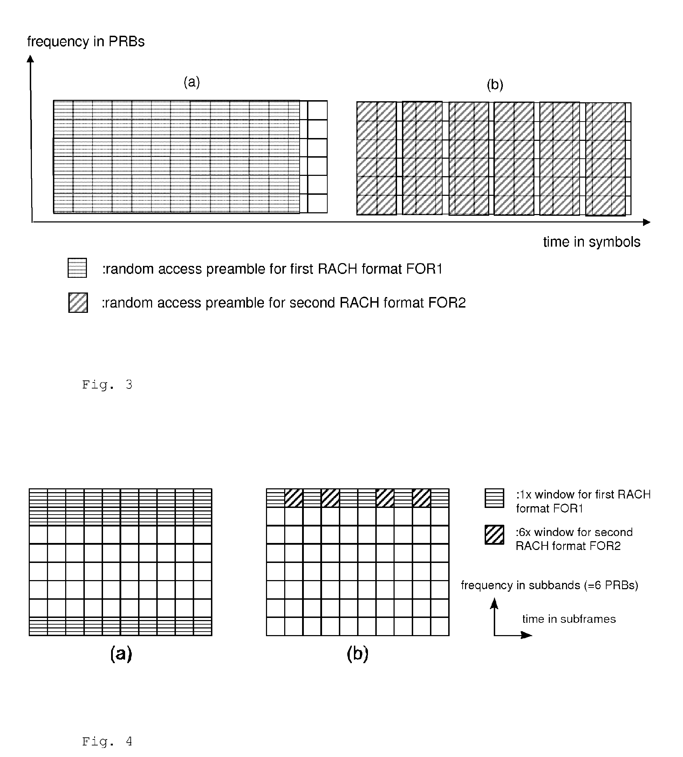

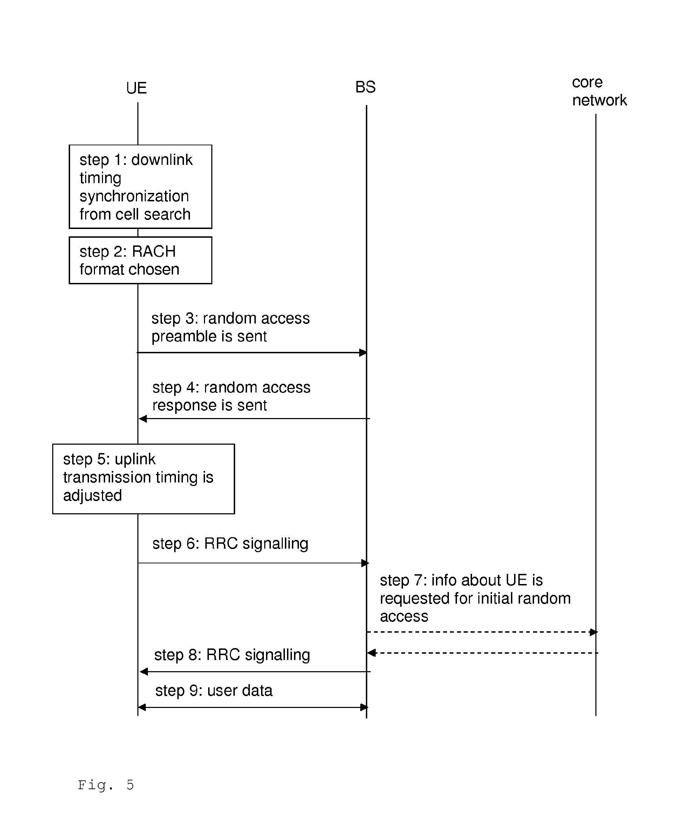

In the sequel, first in fig. 3 and the respective description, time-frequency resource allocations for two formats of a random access procedure according to embodiments of the invention are shown, and then in fig. 4, time-frequency resource allocations of a frame with RACH windows of only one format of a random access procedure, and of a frame with RACH windows of two formats of a random access procedure according to embodiments of the invention are shown. Finally, in fig. 5 a message sequence chart for a random access procedure with different formats according to embodiments of the invention is shown.

Fig. 3 schematically shows time-frequency resource allocations extending over 1MHz = 6 physical resource blocks (PRBs) in frequency domain, and extending over 1ms = 14 symbols in time domain for two formats of a random access procedure according to embodiments of the invention.

Fig. 3(a) shows a RACH window of a first RACH format FOR1, which is used in LTE, with a random access preamble with 0.9 ms length and with a 0.1 ms gap, which is sufficient to cope with uncertainties of an uplink time adjust for uplink transmission timing within a cell radius of approximately 15 km. The extension of the random access preamble for the first RACH format FOR1 is depicted with horizontal lines in fig. 3(a).

Fig. 3(b) shows 6 RACH windows of a second RACH format FOR2, with 6 random access preambles of the second RACH format FOR2, each having a length of 2 symbols, and a gap of ~2/6 symbol length. The extension of the 6 random access preambles for the second RACH format FOR2 is depicted with sloping lines in fig. 3(b). A RACH window of the second RACH format FOR2 can be used by a device, if the device has knowledge of a required uplink time adjust for uplink transmission timing with a certainty of approximately 0.024 ms, which is sufficient to cope with uncertainties of an uplink time adjust for uplink transmission timing within a cell radius of approximately 3.5 km.

Fig. 4 schematically shows time-frequency resource allocations of a frame with RACH windows of only one format of a random access procedure, and of a frame with RACH windows of two formats of a random access procedure according to embodiments of the invention.

Fig. 4(a) and (b) each schematically shows time-frequency resource allocations extending over 8 MHz = 8 subbands, each subband comprising 6 physical resource blocks (PRBs), in frequency domain, and extending over 10 ms = 10 subframes in time domain.

Fig. 4(a) shows a time-frequency resource allocation of 3 RACH windows of the first RACH format FOR1 as depicted in fig. 3(a) and described above per subframe. Each RACH window of the first RACH format FOR1 is depicted as a square with horizontal lines in fig. 4(a).

Fig. 4(b) shows a time-frequency resource allocation of 6 RACH windows of the first RACH format FOR1 as depicted in fig. 3(a) and described above, and of 24 RACH windows of the second RACH format FOR2 as depicted in fig. 3(b) and described above per frame. Each RACH window of the first RACH format FOR1 is depicted as a square with horizontal lines in fig. 4(b), and each group of 6 RACH windows of the second RACH format FOR2 is depicted as a square with sloping lines in fig. 4(b).

In the following, an exemplary embodiment is described in order to estimate a possible saving of radio resources by application of random access procedures using random access windows with two formats.

It is assumed that 300.000 devices are located in a cell, each of the devices sending UL payload every minute on average, which results in 50 RACH attempts per 10ms frame on average, i.e. 5 RACH attempts per 1ms subframe on average.

The application of a contention-based protocol for a random access procedure requires an over-provisioning of approximately a factor of 3. In LTE, this would then require RACH windows of the first RACH format FOR1 in each subframe corresponding to a bandwidth of approximately 3 MHz, as shown in Fig. 4(a). With a system bandwidth of 10 MHZ or 20 MHz, this results in an overhead for RACH windows of ~30% or 15%, respectively.

Furthermore, it is assumed, that an LTE RACH window of the first RACH format FOR1 can carry 6 RACH windows of the second RACH format FOR2, each RACH window of the second RACH format FOR2 having a RACH preamble occupying 72 subcarriers and 2 multi-carrier symbols, and a gap with a duration of ~2/6 symbols sufficient to cope with ~3.5km cell radius, as depicted in fig. 3(b).

In addition, it is assumed, that 80% of the devices can use RACH windows of the second RACH format FOR2, e.g. because said devices are stationary machine-devices, or pedestrian users, resulting in 10 attempts using RACH windows of the first RACH format FOR1 per frame and 40 attempts using RACH windows of the second RACH format FOR2 per frame on average.

Thus, with an over-provisioning for the application of a contention-based protocol for a random access procedure of approximately a factor of 3, and with each RACH window carrying 5 random access preambles in practice as described above, this would require 6 RACH windows of the first RACH format FOR1 per frame and 24 RACH windows of the second RACH format FOR2 per frame, with a resource consumption equivalent to 10 RACH windows of the first RACH format FOR1 per frame. This application of 6 RACH windows of the first RACH format FOR1 per frame and 24 RACH windows of the second RACH format FOR2 per frame is shown in Fig. 4(b). With a system bandwidth of 10 MHZ or 20 MHz, this results in an overhead for RACH windows of ~10% or 5%, respectively.

Thus, the overhead for usage of RACH windows on uplink is reduced by a factor of 3 when using RACH windows of the first and second RACH format FOR1 and FOR2 instead of using RACH windows of only the first RACH format FOR1, as can be seen by comparison of figs. 4(a) and 4(b).

Fig. 5 schematically shows a message sequence chart for a random access procedure of a device UE, as e.g. the device UE as depicted in fig. 2 and described above, to a network by means of a base station BS, as e.g. the base station BS as depicted in fig. 2 and described above, with different formats according to embodiments of the invention.

In step 1, the device UE performs a cell search procedure to get frequency and symbol synchronization of a cell, and to get frame timing of the cell. Furthermore, the device determines the physical-layer cell identity of the cell. The details of the cell search procedure are not depicted in fig. 5 for the sake of simplicity.

In step 2, the device UE chooses based on a certainty of uplink transmission timing of the device a format for the random access procedure out of two or more different formats, as e.g. the first and the second RACH format FOR1 and FOR2 as depicted in figs. 3 and 4 and described above.

In step 3, the device UE sends a random access preamble related to the chosen first or second RACH format FOR1 or FOR2, enabling the base station BS to estimate the uplink transmission timing of the device. In case the device UE selects the first RACH format FOR1, the preamble may be transmitted with zero time advance versus the downlink timing. And in case the device UE selects the second RACH format FOR2, the preamble may be transmitted with the same time advance versus the downlink timing as applied and memorized within the previous wake-up cycle.

In step 4, the base station BS sends a random access response comprising a timing advance command to adjust the uplink transmission timing based on the estimation of the uplink transmission timing of the device performed in step 3. In case the base station BS detects the first RACH format FOR1, it may send an absolute or relative time adjust command, and in case the base station BS detects the second RACH format FOR2, it may send a relative time adjust command. In addition, the random access response also comprises an assignment of uplink resources for the device UE to be used for radio resource control (RRC) signalling in step 6.

In step 5, the device UE adjusts the uplink transmission timing based on the timing advance command received in step 4.

In step 6, the device UE sends amongst others the device ID to the base station BS using RRC signalling.

In step 7, which is only performed if the device UE is not known in the base station BS, the base station BS requests information about the device UE from the network.

In step 8, the base station BS sends a contention-resolution message to the device UE using RRC signalling, which resolves any contention due to multiple devices trying to access the network using the same random access procedure as the device UE.

In step 9, the device UE and the base station BS start exchanging user data.

In embodiments of the invention, similar to self organizing networks (SON) algorithms, which are typically applied on network side, a device could learn to use the second RACH format FOR2 as the preferred format. A new device, as e.g. a device after wake-up or handover, is using the first RACH format FOR1 to gather statistics of the correlation between DL internal timing of the cell search algorithms and the time adjust applied in UL. When the statistics becomes sound, the device will preferably use the second RACH format FOR2 if applicable, i.e. if a certainty of uplink transmission timing deduced from the DL internal timing is good enough, otherwise the device will use the first RACH format FOR1. In a single-vendor LTE radio access network (RAN) this is expected to work well. In multivendor LTE RAN this may not work, since different vendors may apply different UL-DL timing. A solution would be to enforce the UL-DL timing in a standard, as e.g. in the 5G standards, or to signal information on the UL-DL timing in downlink e.g. within system information broadcast.

In the embodiments described above and depicted e.g. in figs. 3, 4 and 5, the corresponding processing steps can be performed e.g. in the modem unit boards MU1-MU4 and the control unit board CU1, CU2 of the base station BS and the device UE respectively as depicted in fig. 2 and described above.

## Claims

1. A method for a random access procedure for access of a device (UE) to a network, wherein
• the device (UE) uses a format for the random access procedure out of at least two formats (FOR1, FOR2) for the random access procedure,
• and said format for the random access procedure is chosen based on a certainty of uplink transmission timing of the device.

2. A method according to claim 1, wherein a first format (FOR1) for the random access procedure which is chosen for a first certainty of uplink transmission timing of the device (UE) occupies more radio resources than a second format (FOR2) for the random access procedure which is chosen for a second certainty of uplink transmission timing, the first certainty of uplink transmission timing being lower than the second certainty of uplink transmission timing.

3. A method according to claim 2, wherein the first format (FOR1) for the random access procedure is chosen for an initial access of the device to the network.

4. A method according to claim 2 or 3, wherein the second format (FOR2) for the random access procedure is chosen if the location of the device has been determined or if a time difference of correlation peaks of a downlink cell search procedure before and after wake up of the device (UE) in a same cell is below a predefined threshold.

5. A method according to any of the claims 2, 3 or 4, wherein the second format (FOR2) for the random access procedure is chosen if a velocity of the device (UE) is below a predefined threshold.

6. A method according to any of the claims 2 to 5, wherein the second format (FOR2) for the random access procedure is chosen for applications with burst data transmission or signaling traffic.

7. A method according to any of the claims 2 to 6, wherein the first format (FOR1) for the random access procedure is chosen if usage of the second format (FOR2) for the random access procedure does not cause a reaction by the network within a predefined number of attempts for the random access procedure.

8. A method according to any of the claims 2 to 7, wherein the network bars the device (UE) from using the second format (FOR2) for the random access procedure if the network detects that the device (UE) is roaming across at least two cells.

9. A method according to any of the claims 2 to 8, wherein a correlation between downlink timing from a cell search algorithm and adjustment of uplink transmission timing for devices using the first format (FOR1) for the random access procedure is determined.

10. A method according to any of the preceding claims, wherein a relation between downlink timing and uplink transmission timing is unambiguous in the network.

11. A method according to any of the preceding claims, wherein information on a relation between downlink timing and uplink transmission timing is signaled in downlink in the network.

12. A base station (BS) suitable for random access procedures for access of devices (UE) to a network, wherein said base station (BS) is operable to
• receive random access preambles for at least two formats (FOR1, FOR2) of the random access procedure dependent on a certainty of uplink transmission timings of the devices,
• and determine uplink transmission timings of the devices by evaluating the random access preambles.

13. A device (UE) suitable for a random access procedure for access of the device (UE) to a network, wherein the device (UE) is operable to
• choose a format for the random access procedure out of at least two formats (FOR1, FOR2) for the random access procedure based on a certainty of uplink transmission timing of the device,
• and send in uplink a random access preamble for the chosen format of the random access procedure.
